(19) Europäisches Patentamt

European Patent Office

Office européen des brevets

(11) **EP 1 559 249 B1**

(12) **FASCICULE DE BREVET EUROPEEN**

(45) Date de publication et mention
de la délivrance du brevet:
**13.12.2006 Bulletin 2006/50**

(21) Numéro de dépôt: **03767861.2**

(22) Date de dépôt: **29.10.2003**

(51) Int Cl.:
*H04L 12/56* (2006.01)     *H04L 12/26* (2006.01)
*H04L 29/06* (2006.01)

(86) Numéro de dépôt international:
**PCT/FR2003/003230**

(87) Numéro de publication internationale:
**WO 2004/045158 (27.05.2004 Gazette 2004/22)**

(54) **PROCEDE ET SYSTEME DE REGULATION DE LA CONSOMMATION DE VOLUME DE TRAFIC D ENTITES INFORMATIQUES AYANT ACCES A DES RESSOURCES     PARTAGEES**

VERFAHREN UND SYSTEM ZUR STEUERUNG DES VERBRAUCHS AN VERKEHRSVOLUMEN DURCH INFORMATIONSEINHEITEN MIT ZUGANG ZU GEMEINSAMEN RESSOURCEN

METHOD AND SYSTEM FOR REGULATING VOLUME CONSUMPTION OF TRAFFIC OF COMPUTER ENTITIES HAVING ACCESS TO SHARED RESOURCES

(84) Etats contractants désignés:
**AT BE BG CH CY CZ DE DK EE ES FI FR GB GR HU IE IT LI LU MC NL PT RO SE SI SK TR**

(30) Priorité: **06.11.2002 FR 0213887**

(43) Date de publication de la demande:
**03.08.2005 Bulletin 2005/31**

(73) Titulaire: **FRANCE TELECOM**
**75015 Paris (FR)**

(72) Inventeurs:
• **BROWN, Patrick**
**F-06921 Sophia-Antipolis (FR)**
• **COLLANGE, Denis**
**F-06921 Sophia-Antipolis (FR)**
• **BUSTOS, Anne-Marie**
**F-06921 Sophia-Antipolis (FR)**

(74) Mandataire: **Habasque, Etienne J. Jean-François et al**
**Cabinet Lavoix,**
**2, Place d'Etienne d'Orves**
**75441 Paris Cédex 09 (FR)**

(56) Documents cités:
**EP-A- 0 892 531          GB-A- 2 346 302**

**Description**

L'invention est relative à un procédé et à un système de régulation de la consommation de volume de trafic d'entités informatiques ayant accès à des ressources partagées.

Les utilisateurs d'appareils informatiques connectés en réseau, en particulier par l'intermédiaire du réseau Internet, sont, en général, demandeurs de services à caractère forfaitaire, indépendamment de l'utilisation que ces derniers font de ces ressources partagées, et, de préférence, sans contrainte de durée.

En échange de telles conditions d'accès, ces utilisateurs attendent une bonne qualité de service, seules des dégradations aux conditions d'accès de type occasionnel, dues par exemple à des congestions, étant susceptibles d'être acceptées par ces derniers.

Ce mode d'accès aux ressources, dans le cadre de la relation fournisseur d'accès/client ou utilisateur, est désigné par service "Best Effort" en langage anglo-saxon. La notion de "Best Effort" implique en général des conditions d'accès de même type pour tous les utilisateurs.

Un tel mode d'accès impose, notamment, un dimensionnement des ressources fortement dépendant des utilisateurs des plus gros volumes de trafic en réseau. Toutefois, il ne permet pas de différencier les utilisateurs en fonction de l'usage ou utilisation de l'accès aux ressources de ces derniers, accès en termes de volume de trafic.

En effet, en raison du caractère forfaitaire de l'accès aux ressources, un tel accès n'est pas basé sur le trafic émis ou reçu entre entité informatique d'utilisateur et ressource partagée par un ensemble de ces derniers.

Ainsi, à l'heure actuelle, l'optimisation de l'utilisation des ressources n'est guère envisageable qu'en fonction de l'utilisation moyenne des ressources par l'ensemble des utilisateurs.

Une telle utilisation, accompagnée des objectifs de qualité de service nécessaires, induit des règles de dimensionnement des ressources qui se traduisent par des investissements et des coûts de maintenance et de gestion non négligeables.

En conséquence, en l'absence de toute prise en compte de l'utilisation relative des ressources entre les différents utilisateurs de ressources partagées, les utilisateurs de gros volumes de trafic augmentent, en fait, les coûts de l'accès au service pour l'ensemble des utilisateurs. Les utilisateurs de volumes de trafic plus faibles se voient, en quelque sorte, ainsi pénalisés, les ressources, utilisées par ces derniers, définies à partir de l'utilisation moyenne des ressources, apparaissant largement surdimensionnées vis-à-vis de l'utilisation résultant des volumes de trafic plus faibles. Dans ces conditions, des techniques visant à réguler de telles dispositions de volume de trafic n'ont, à ce jour, pas été envisagées.

Des techniques spécifiques de contrôle des volumes de trafic engendrés par les utilisateurs d'accès dans le domaine de la transmission de données en réseau ont été proposées.

Ces techniques agissent, d'une manière générale, sur le trafic à court terme et peuvent être classées en techniques de contrôle préventif ou de contrôle adaptatif.

Les processus de contrôle préventif agissent soit en limitant strictement le débit de données des utilisateurs, soit en limitant le débit continu, encore désigné débit soutenu, en autorisant toutefois des rafales de trafic.

Les processus de contrôle de trafic préventif précités entravent l'accès au réseau des utilisateurs lorsqu'ils font une consommation intensive de ces ressources, ce qui est souvent le cas lorsque les utilisateurs précités sont actifs.

Ainsi, les utilisateurs précédemment cités sont souvent pénalisés lorsqu'ils sont actifs, même s'ils le sont rarement ou s'ils utilisent peu de ressources réseau en moyenne.

En effet, il est connu, dans le domaine technique de la transmission de données en réseau, que le trafic de données engendrées par un utilisateur est fortement variable dans le temps.

En particulier, le débit de trafic moyen engendré par un tel utilisateur est très faible par rapport au débit auquel cet utilisateur, lorsqu'il est actif, accède au réseau.

Dans ces conditions, tout gestionnaire d'une ressource partagée, telle qu'un serveur dédié, une base de données ou autres, et en particulier un opérateur de réseau, se voit offrir uniquement deux possibilités d'action, soit limiter a priori le débit maximum ou le débit soutenu autorisé pour l'exécution de la transaction à la valeur du débit ou trafic moyen, en contradiction avec l'usage légitime que souhaiterait en faire cet utilisateur, soit supprimer ce type de contraintes en l'absence de tout contrôle et de mesure protectrice lors des périodes de congestion.

Les processus de contrôle adaptatif correspondent, par exemple, à des processus mis en oeuvre dans le cadre du protocole TCP établi par l'I.E.T.F. (Internet Engineering Task Force). Le protocole TCP est mis en oeuvre dans les stations de travail, les ordinateurs personnels et les serveurs informatiques.

Il permet d'offrir une qualité de service égale aux différents utilisateurs qui en font usage dans les mêmes conditions. Toutefois, il ne permet pas à un gestionnaire de ressource partagée ou à un opérateur de réseau, par exemple, de contrôler ou réguler la consommation en termes de volume de trafic que fait l'utilisateur d'une entité informatique accédant à une ressource partagée.

D'autres techniques de contrôle adaptatif ont été mises en oeuvre sur les réseaux. Ces techniques nécessitent, toutefois, la configuration spécifique de ces réseaux, des connexions devant être spécifiquement établies entre deux unités communicantes, telles qu'une entité informatique et une ressource partagée.

A titre d'exemples relatifs à ces autres techniques, on peut citer :

- le mécanisme ABR, pour "Avaliable Bit Rate", en langage anglo-saxon, défini par l'ATM Forum, association d'équipementiers en télécommunications et d'opérateurs ;
- le protocole Frame Relay, protocole FR, lequel utilise des bits d'information dans les trames du protocole, sous forme de messages BECN "Backward-Explicit Congestion Notification" et FECN "Forward-Explicit Congestion Notification", afin de notifier aux entités communicantes en extrémité d'une connexion réseau qu'il est nécessaire de réduire le débit de transmission, en raison d'une congestion de l'une des ressources réseau utilisées.

Les techniques adaptatives précitées permettent uniquement de contrôler et partager l'utilisation des ressources réseau sur des échelles de temps de l'ordre d'un aller-retour sur le réseau, c'est-à-dire en dessous de quelques secondes.

En particulier, elles ne permettent aucunement d'équilibrer, voire de planifier l'accès aux ressources du réseau et aux ressources partagées connectées à ce réseau sur des périodes plus longues, significatives du comportement des utilisateurs en matière d'accès au réseau en termes de volume moyen de trafic.

On connaît également d'après GB 2 346 302 A un procédé de régulation de charge dans un réseau informatique comportant un noeud à serveurs multiples. Dans ce document, une répartition de charge entre les serveurs est mise en oeuvre en fonction de motifs d'usage du réseau.

La présente invention a pour but de remédier à l'ensemble des inconvénients ou limitations inhérents aux techniques actuelles, connues de l'art antérieur.

En particulier, un objet de la présente invention est la mise en oeuvre d'un procédé et d'un système de régulation de la consommation, en termes de volume de trafic, d'entités informatiques ayant accès à des ressources partagées, permettant un partage équitable de l'accès et des conditions d'accès à une ou plusieurs ressources partagées entre utilisateurs d'entités informatiques distinctes, utilisateurs dont la demande d'accès en termes de volume de trafic est fortement variable dans le temps.

Un autre objet de la présente invention est, en outre, dans le cadre de la mise en oeuvre du partage équitable précité, une personnalisation de l'estimation de la demande moyenne en termes d'accès ou de volume de trafic sur des périodes d'analyse de longue durée, significatives de la consommation de cet utilisateur en termes de consommation moyenne de volume de trafic.

Un autre objet de la présente invention est la mise en oeuvre d'un procédé et d'un système de régulation de la consommation de volume de trafic entre entités informatiques et ressources partagées connectées en réseau, permettant d'assurer statistiquement une bonne qualité de service aux utilisateurs, dits utilisateurs de volumes de trafic normaux, qui n'utilisent pas plus de ressources réseau que les quantités auxquelles ils ont souscrit, sur des périodes de temps correspondant aux échelles de temps permettant d'estimer le trafic moyen de ces derniers.

Un autre objet de la présente invention est, en outre, la mise en oeuvre d'un procédé et d'un système de régulation de la consommation de volume de trafic d'entités informatiques ayant accès à des ressources partagées, permettant d'assurer, pour les autres utilisateurs, distincts des utilisateurs de volumes normaux de trafic, un accès aux ressources résiduelles d'un service ou mode d'accès, en termes de volume de trafic, de type "Best Effort", c'est-à-dire sans garantie effective de qualité de service, en fonction des ressources réseau effectivement disponibles.

Un autre objet de la présente invention est également la mise en oeuvre d'un procédé et d'un système de régulation de la consommation de volume de trafic d'entités informatiques ayant accès à des ressources partagées permettant une indexation directe des conditions forfaitaires d'accès au réseau, et aux ressources partagées, sur le niveau de consommation moyenne, en termes de volume de trafic, par utilisateur et non sur un niveau de consommation instantanée.

Un autre objet de la présente invention est, enfin, la mise en oeuvre d'un procédé et d'un système de régulation de la consommation de volume de trafic permettant de définir plusieurs niveaux de consommation de volume de trafic, et, en conséquence, plusieurs niveaux de qualité de service correspondant lors de l'accès aux ressources partagées.

L'invention propose un procédé de régulation de la consommation, en termes de volume de trafic, d'une pluralité d'entités informatiques ayant accès à une ressource partagée connectée en réseau à ces entités informatiques, l'accès à cette ressource partagée étant effectué à partir d'une entité informatique sur requête d'accès adressée à ladite ressource par ladite entité informatique, le procédé comprenant les étapes consistant, pour chaque entité informatique :

- à décompter pour ladite entité informatique, au fil de l'émission des requêtes d'accès, le volume de trafic entre ladite entité informatique et ladite ressource ;
- à déterminer, à une date d'évaluation courante, la valeur décomptée du volume de trafic entre ladite ressource et ladite entité informatique ;
- à comparer une valeur de classification fonction de la valeur décomptée du volume de trafic à la date d'évaluation courante à une pluralité de valeurs de seuil de volume de trafic, la distribution desdites valeurs de seuil constituant une classification de ladite entité informatique en termes de volume de trafic ; et

- à contrôler l'accès instantané à ladite ressource par ladite entité informatique pour l'intervalle de temps suivant la date d'évaluation courante, le procédé étant caractérisé en ce qu'il comprend les étapes consistant :

  - à établir une base temporelle constituée par une suite d'intervalles de temps séparés par des instants, constitutifs de dates d'évaluation ; et
  - à établir une pluralité de files d'attente d'accès à ladite ressource partagée, chaque file d'attente étant associée à un intervalle de valeurs de seuil ;
    et en ce que l'étape de contrôle d'accès instantané comporte l'allocation de chaque requête d'accès de ladite entité informatique à la file d'attente associée à l'intervalle de valeurs de seuil dans lequel se trouve ladite valeur de classification.

L'invention propose également un système de régulation de la consommation, en termes de volume de trafic, d'une pluralité d'entités informatiques ayant accès à une ressource partagée en réseau à ces entités informatiques, l'accès à cette ressource partagée étant effectué à partir d'une entité informatique sur requête d'accès adressée à ladite ressource par ladite entité informatique, ledit système comprenant, pour chaque entité informatique :

- des moyens de comptage-décomptage, au fil de l'émission des requêtes d'accès, du volume de trafic entre ladite entité informatique et ladite ressource, lesdits moyens de comptage-décomptage délivrant une valeur de volume de trafic décomptée ;
- des moyens d'échantillonnage, à une date d'évaluation courante, de ladite valeur de volume de trafic décomptée, lesdits moyens d'échantillonnage délivrant la valeur décomptée du volume de trafic à la date d'évaluation courante entre ladite ressource et ladite entité informatique;
- des moyens comparateurs d'une valeur de classification fonction de la valeur décomptée du volume de trafic à la date d'évaluation courante à une pluralité de valeurs de seuil de volume de trafic, la distribution desdites valeurs de seuil constituant une classification de ladite entité informatique en termes de volume de trafic ;
- des moyens de contrôle de l'accès instantané à ladite ressource par ladite entité informatique, pour l'intervalle de temps suivant la date d'évaluation courante,
  le système étant caractérisé en ce qu'il comprend une base temporelle constituée par une suite d'intervalles de temps séparés par des instants, constitutifs de dates d'évaluation, et une pluralité de files d'attente d'accès à ladite ressource partagée, chaque file d'attente étant associée à un intervalle de valeurs de seuil, et en ce que les moyens de contrôle sont adaptés pour allouer chaque requête d'accès de ladite entité informatique à la file d'attente associée à l'intervalle de valeurs de seuil dans lequel se trouve ladite valeur de classification.

Le procédé et le système de régulation de la consommation, en termes de volume de trafic, d'une pluralité d'entités informatiques ayant accès à une pluralité de ressources partagées, objets de l'invention, trouvent application à l'échange de données en réseau à haut débit du type ADSL ou par câble, à l'accès partagé à des bases de données ou à l'accès à des serveurs informatiques.

Le procédé et le système objets de la présente invention seront mieux compris à la lecture de la description et à l'observation des dessins ci-après, dans lesquels :

- la figure 1 représente, à titre illustratif, un organigramme des étapes essentielles du procédé objet de la présente invention
- la figure 2 représente, à titre d'exemple non limitatif, un mode de mise en oeuvre spécifique de l'étape de comptage-décomptage mise en oeuvre dans le cadre du procédé objet de la présente invention, tel que représenté en figure 1 ;
- la figure 3A représente, à titre d'exemple non limitatif, un mode de mise en oeuvre spécifique de l'étape de contrôle d'accès instantané mise en oeuvre dans le cadre du procédé objet de la présente invention, tel que représenté en figure 1 ;
- la figure 3B représente, à titre purement illustratif, un mode de mise en oeuvre de la gestion des files d'attente permettant d'assurer le contrôle d'accès instantané illustré en figure 3A ;
- la figure 3C représente, à titre purement illustratif, un mode de mise en oeuvre préférentiel de la gestion des files d'attente permettant d'assurer le contrôle d'accès instantané illustré en figure 3A ;

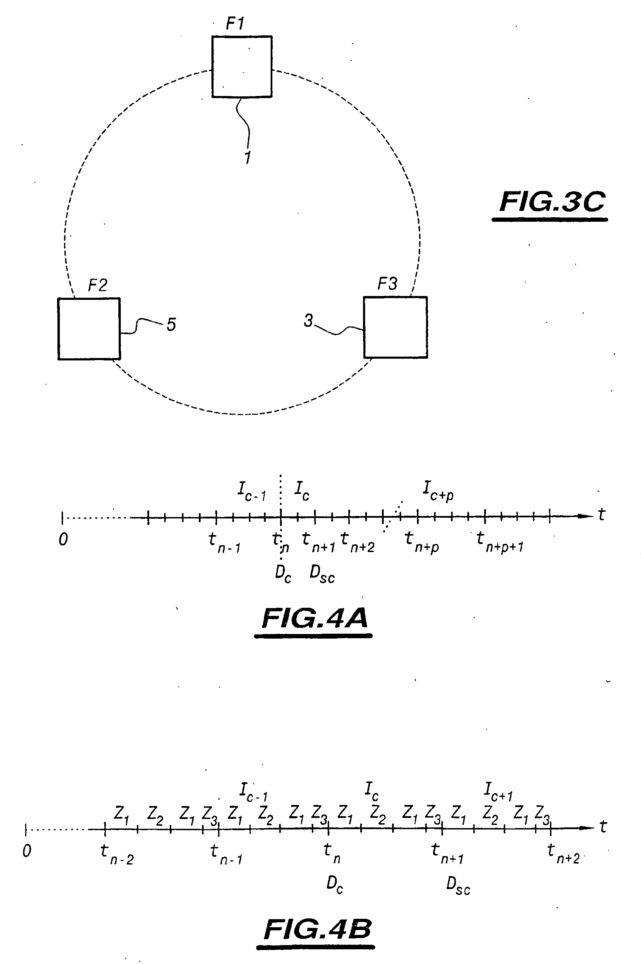

- les figures 4A et 4B représentent, à titre illustratif, une première et une deuxième variante de mise en oeuvre d'une base temporelle spécifique, permettant, de manière particulièrement avantageuse, de définir et de dédier les intervalles d'évaluation en fonction du contexte d'utilisation de l'entité informatique par l'utilisateur dans deux situations distinctes, une première situation correspondant à une variation du volume de trafic prévisible de cette entité et une deuxième situation correspondant à une variation temporelle sensiblement répétitive du volume de trafic consommé par cette entité respectivement ;
- la figure 4C représente, à titre illustratif, un mode de mise en oeuvre spécifique d'une pluralité de classifications en classes de service distinctes pour des intervalles de temps subdivisés en zones temporelles, ainsi qu'illustré en figure 4B ;

- la figure 5A représente, à titre illustratif, un schéma fonctionnel par blocs d'un système de régulation de la consommation en termes de volume de trafic entre une pluralité d'entités informatiques ayant accès à une pluralité de ressources partagées connectées en réseau, conforme à l'objet de la présente invention :
- la figure 5B représente, à titre purement illustratif, une première variante de mise en oeuvre du système objet de l'invention, dans le cas où un code de classification est alloué à l'entité informatique pour l'ensemble des requêtes d'accès à une ressource spécifique pendant l'intervalle de temps suivant, la transmission des requêtes d'accès et du code de classification de l'entité vis-à-vis de la ressource étant plus particulièrement effectuée par l'entité informatique vers le module de contrôle d'accès constitutif du système objet de la présente invention représenté en figure 5A ;
- la figure 5C représente, à titre purement illustratif, une deuxième variante de mise en oeuvre du système objet de l'invention, dans le cas où un code de classification est alloué à l'entité informatique pour les requêtes d'accès à une ressource spécifique durant un intervalle de temps, la transmission de couples de variables référence de désignation d'entité informatique/code de classification attribué à celle-ci est effectuée du module comparateur vers le module de contrôle d'accès.

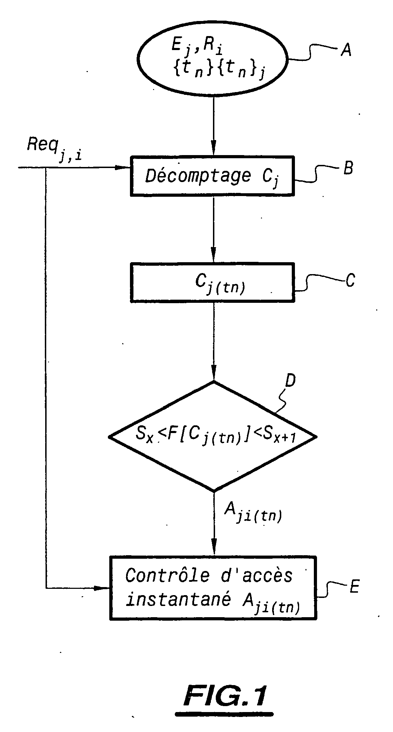

Une description plus détaillée du procédé de régulation de la consommation en termes de volume de trafic d'une pluralité d'entités informatiques ayant accès à une pluralité de ressources partagées, objet de la présente invention, sera maintenant donnée en liaison avec la figure 1 et les figures suivantes.

D'une manière générale, on indique que le procédé objet de la présente invention permet d'assurer une régulation de l'accès aux ressources partagées $R_i$ pour chacune des entités Ej. L'accès à toute ressource partagée Ri est effectué à partir d'une entité informatique Ej sur requête d'accès $Req_{ji}$ adressée à la ressource partagée par l'entité informatique précitée.

Pour la mise en oeuvre du procédé objet de la présente invention, on considère, en conséquence, une entité informatique Ej et une ressource partagée Ri quelconques à l'étape de départ A.

Conformément au procédé précité, celui-ci consiste à établir une base temporelle, notée $\{t_n\}$ constituée par une suite d'intervalles de temps séparés par des instants constitutifs de dates d'évaluation.

D'une manière générale, on indique que la base temporelle précitée peut être constituée par une base temporelle unique pour l'ensemble des entités informatiques $E_j$ connectées en réseau. Dans cette situation, la base temporelle est notée $\{t_n\}$, les instants constitutifs de dates d'évaluation, notés $t_n$, étant directement donnés par le temps système de chaque entité informatique, par exemple, ce temps système étant, bien entendu, relié au temps universel.

Selon une variante de mise en oeuvre de la base temporelle précitée, celle-ci peut être constituée par une base temporelle dédiée à l'entité informatique $E_j$ considérée. Dans cette situation, les instants constitutifs de dates d'évaluation sont, bien entendu, également reliés au temps système de l'entité informatique considérée, mais les dates d'évaluations précitées peuvent être adaptées en fonction du volume de trafic habituellement demandé par l'entité informatique précitée, ainsi qu'il sera décrit ultérieurement dans la description.

Dans cette deuxième situation, la base temporelle dédiée à l'entité informatique $E_j$ est notée de manière semblable $\{t_n\}_j$.

Dans l'un et l'autre cas, base temporelle unique ou base temporelle dédiée, on indique que les dates d'évaluation peuvent être constituées par les dates système de chaque entité informatique $E_j$ repérée de manière conventionnelle par les variables d'année, de mois, de jour, le cas échéant d'heure, minute, seconde, ces variables étant données par le temps système.

L'étape A est alors suivie d'une étape B consistant à décompter, pour l'entité informatique considérée $E_j$, au fil de l'émission des requêtes d'accès $Req_{ji}$, le volume de trafic entre l'entité informatique précitée et la ressource $R_i$. L'étape B est alors suivie d'une étape C consistant à déterminer à la date d'évaluation courante, c'est-à-dire la date $t_n$ courante, la valeur décomptée du volume de trafic entre la ressource partagée $R_i$ et l'entité informatique $E_j$.

Sur la figure 1, l'opération consistant à déterminer, à la date d'évaluation courante, la valeur décomptée du volume de trafic précité, permet d'obtenir une valeur de volume de trafic notée $Cj(t_n)$.

On comprend, en particulier, que la valeur décomptée précitée de volume de trafic est comptée à partir de l'émission de chaque requête d'accès, puis évaluée à chaque date d'évaluation $t_n$.

L'étape C est alors suivie d'une étape D consistant à comparer une valeur fonction de la valeur décomptée du volume de trafic à la date d'évaluation courante $C_j(t_n)$ à une pluralité de valeurs de seuil de volume de trafic.

Sur la figure 1, l'opération de comparaison est représentée par la relation :

$$S_x < F[Cj_{(t_n)}] < S_{x+1}$$

relation dans laquelle, $S_x$ et $S_{x+1}$ indiquent une pluralité de valeurs de seuil successives de volume de trafic, $F[C_j(t_n)]$ désigne la valeur fonction de la valeur décomptée, cette valeur fonction pouvant être évaluée à partir de la valeur décomptée $C_j(t_n)$) à la date d'évaluation courante et de valeurs décomptées antérieurement, ainsi qu'il sera décrit ultérieurement dans la description.

Selon un aspect remarquable du procédé objet de la présente invention, la distribution des valeurs de seuil précitées $S_x$ et suivantes constitue une classification de l'entité informatique $E_j$ en termes de volume de trafic consommé.

D'une manière plus spécifique, on indique que le processus de classification, associé à l'opération de comparaison précitée, peut, avantageusement, consister, suite à la comparaison précitée, à délivrer une valeur de classification notée $A_{ji}(t_n)$, cette valeur de classification constituant en fait un code de classification pour les requêtes successives de l'entité informatique $E_j$ considérée pour la ressource partagée Ri, sur l'intervalle de temps $]t_n, t_{n+1}]$ suivant.

L'opération D peut alors être suivie d'une opération E consistant à contrôler l'accès instantané à la ressource partagée $R_i$ par les requêtes successives de l'entité informatique $E_j$ pour l'intervalle de temps suivant l'intervalle de temps défini par la date d'évaluation courante $t_n$ et la date d'évaluation suivant cette date d'évaluation courante, en fonction de la valeur du code de classification $A_{ji}(t_n)$.

On comprend, en particulier, que les conditions de volume de trafic et d'accès à la ressource partagée $R_i$ par l'entité informatique $E_j$ sont définies à partir du code de classification $A_{ji}(t_n)$, c'est-à-dire de la classification de l'entité informatique $E_j$ en termes de volume de trafic.

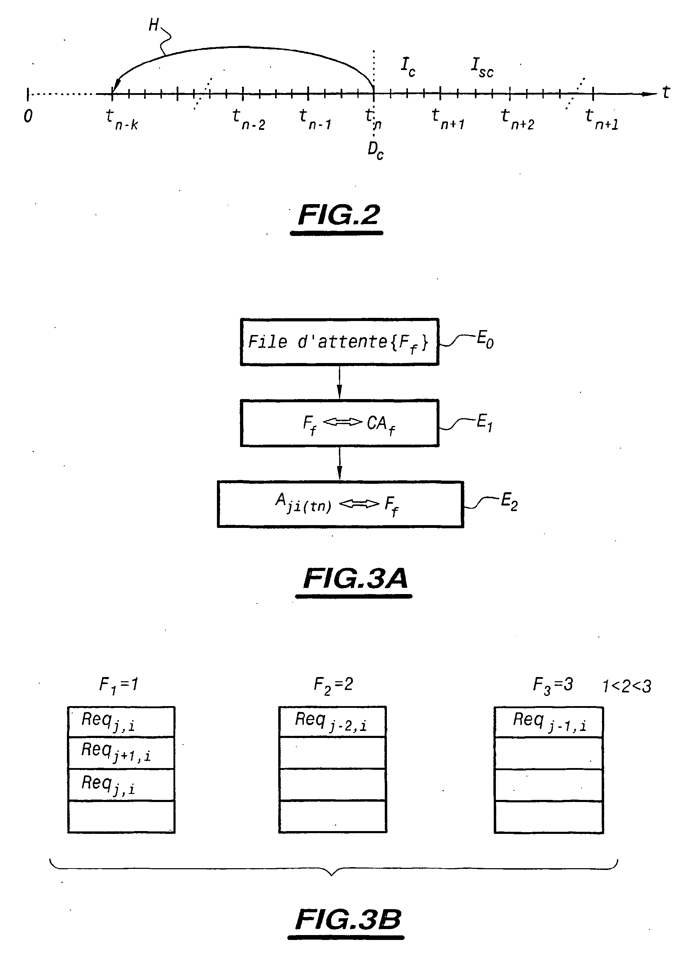

Une description plus détaillée du processus mis en oeuvre pour assurer le décompte du volume de trafic, d'une part, et l'exécution du contrôle d'accès instantané, d'autre part, sera maintenant donnée en liaison avec les figures 2, 3A à 3C.

D'une manière générale, on indique que, pour l'exécution du contrôle de l'accès instantané, en fonction de la valeur fonction de la valeur décomptée de volume de trafic à la date d'évaluation courante, le procédé objet de l'invention consiste à définir le volume de trafic $C_j(t_n)$ pour tout ou partie de l'ensemble du volume de trafic antérieur à la date d'évaluation courante.

Sur la figure 2, on a représenté des dates d'évaluation successives sur un axe des temps croissants par rapport à une origine arbitraire o, les dates d'évaluation successives étant notées :

$$t_{n-k} \ldots t_{n-2}, t_{n-1}, t_n, t_{n+1}, t_{n+2} \ldots t_{n+l}.$$

Dans ces conditions, et en relation avec la figure 1, on indique que la date d'évaluation courante $t_n$ est désignée par $D_c$ et la date d'évaluation suivant la date d'évaluation courante $t_{n+1}$ est désignée par $D_{sc}$. Dans ces conditions, l'intervalle de temps défini par la date d'évaluation courante $t_n$ et par la date d'évaluation suivant cette date d'évaluation courante $t_{n+1}$ est désigné intervalle de temps courant $I_c$.

En référence à la figure 1, on comprend que la comparaison de l'étape D d'accès, suite à l'évaluation à la date d'évaluation courante $D_c$, c'est-à-dire à l'instant d'évaluation $t_n$, permet l'établissement du code de classification $A_{ji}(t_n)$, lequel est ensuite appliqué sur l'intervalle suivant $I_c$.

On comprend, bien sûr, que le processus est poursuivi pour assurer un suivi effectif de la consommation de volume de trafic de chaque entité informatique $E_j$ précitée.

En outre, et selon un aspect avantageux du procédé objet de l'invention, celui-ci consiste à définir le volume de trafic pour tout ou partie de l'ensemble du volume de trafic antérieur à la date d'évaluation courante. Dans ces conditions, sur la figure 2, on a représenté, à titre d'exemple non limitatif, le calcul de la valeur fonction du volume de trafic effectif par un cumul du trafic effectif entre la date d'évaluation courante $D_c$ à l'instant $t_n$ et l'instant antérieur $t_{n-k}$ arbitraire.

Dans un mode de mise en oeuvre préférentiel non limitatif, on indique que les intervalles de temps successifs, intervalle de temps courant $I_c$ et intervalle de temps suivant $I_{sc}$, peuvent être des intervalles d'évaluation périodique, la période pouvant être choisie égale au jour, à la semaine, au mois, au semestre ou autre.

Ainsi, la définition du volume de trafic pour tout ou partie de l'ensemble du volume de trafic antérieur à la date d'évaluation courante peut être choisie en fonction des conditions d'utilisation de l'entité informatique $E_j$ considérée, par exemple.

En outre, les intervalles d'évaluation peuvent être dédiés en fonction du contexte d'utilisation, c'est-à-dire finalement, des conditions d'utilisation par chaque utilisateur de l'entité informatique $E_j$ considérée.

A titre d'exemple non limitatif, on indique que, par entité informatique, on considère non seulement une installation monoposte connectée en réseau, mais également tout système d'information comportant une pluralité de postes de travail connectés en réseau par l'intermédiaire d'une adresse commune et susceptible d'avoir chacun accès à la ressource partagée $R_i$.

Un mode de mise en oeuvre spécifique de l'exécution du contrôle d'accès instantané, c'est-à-dire de l'étape E de la figure 1, sera maintenant décrit avec les figures 3A à 3C.

Ainsi que représenté sur la figure 3A, l'étape consistant à contrôler l'accès instantané à la ressource partagée peut comprendre une étape $E_0$ consistant à établir une pluralité de files d'attente, la pluralité de files d'attente étant notée $\{F_f\}$.

L'étape $E_0$ est suivie d'une étape $E_1$ consistant à assigner à chaque file d'attente une règle établissant les conditions d'accès à la ressource partagée $R_i$ précitée. Cette opération est réalisée par une opération d'affectation représentée symboliquement par la relation :

$$F_f \Leftrightarrow CA_f$$

où $CA_f$ désigne la règle définissant les conditions d'accès à la ressource $R_i$ considérée. On rappelle, en particulier, que les conditions d'accès peuvent être définies par des conditions de débit imposées, par exemple, afin de contrôler la transaction entre une des files d'attente $F_f$ et la ressource partagée Ri considérée.

L'étape $E_1$ peut alors être suivie d'une étape E2 consistant à associer à chaque code de classification une file d'attente $F_f$, ceci afin de permettre d'allouer à chaque requête d'accès $Req_{ji}$ l'une des files d'attente $F_f$.

L'opération précitée réalisée à l'étape $E_2$ est représentée symboliquement par la relation:

$$A_{ji}(t_n) \Leftrightarrow F_f.$$

Un premier exemple de mise en oeuvre des files d'attente sera maintenant décrit avec la figure 3B.

En référence à la figure précitée, on indique que la pluralité de files d'attente $\{F_f\}$ peut être organisée selon un ordre de priorité, à chaque file d'attente étant attribué un ordre de priorité relatif vis-à-vis de l'ordre de priorité d'une autre file d'attente.

Sur la figure 3B, on a représenté trois files d'attente, notées $F_1$ à $F_3$, à chacune des files d'attente précitées étant attribué un ordre de priorité, l'ordre de priorité 1, 2 et 3 étant attribué respectivement aux files d'attente $F_1$, $F_2$ et $F_3$.

L'ordre de priorité est représenté par la relation :

$$1 > 2 > 3$$

cette relation d'ordre représentant la relation d'ordre de priorité relatif de chaque file d'attente. Dans ces conditions, chaque file d'attente comprend, avantageusement, une mémorisation de requête d'accès $Req_{j,i}$. On comprend, ainsi, qu'aux valeurs de requête d'accès mémorisées dans chaque file d'attente, pourra être attribué l'accès à la ressource $R_i$ considérée en fonction de l'ordre de priorité précédemment cité selon le processus classique.

Un deuxième exemple de mise en oeuvre des files d'attente sera maintenant décrit en liaison avec la figure 3C. Sur la figure 3C, on a représenté également trois files d'attente $F_1$, $F_2$ et $F_3$. Ces files d'attente peuvent être, de manière avantageuse, gérées selon un protocole de séquencement périodique pondéré de l'accès à la ressource allouée à chaque file d'attente.

Ainsi, à chaque file d'attente peut être attribué un coefficient de pondération, 1 pour la file d'attente $F_1$, 3 pour la file d'attente $F_3$ et 5 pour la file d'attente $F_2$, par exemple, ce coefficient de pondération permettant de restreindre le flux ou, au contraire, de laisser passer ce dernier, le coefficient de pondération permettant une régulation du débit relatif, par exemple, en nombre de requêtes effectivement transmises à partir de la file d'attente considérée. On comprend, en particulier, que pour des requêtes émanant d'entités informatiques dont le code de classification $A_{ji}$ est associé à la file $F_2$ sur l'intervalle de temps courant, le coefficient de pondération égal à 5 permettra l'accès à cinq requêtes, par exemple. La file d'attente $F_1$ n'autorisera l'accès qu'aux requêtes dont la valeur de code de classification est associée à la file d'attente $F_1$.

En référence aux figures 2 à 3C précitées, on comprend, grâce à la mise en oeuvre du procédé objet de l'invention, qu'à chaque entité informatique $E_j$ est au préalable allouée une classe de service consistant en une fonction d'évaluation spécifique d'indice j, $F_j[(C_j(t_n)]$, et d'une suite de valeurs de seuils, permettant la classification de l'entité informatique considérée $E_j$ sur l'intervalle d'évaluation considéré et l'association de la classification à des conditions d'accès $CA_f$ à la ressource $R_i$. Dans ces conditions, le procédé objet de l'invention est particulièrement remarquable en ce qu'il permet d'associer des conditions d'accès distinctes à la classification obtenue en fonction des comportements moyens des utilisateurs, en termes de volumes d'accès.

Le procédé objet de la présente apparaît particulièrement remarquable en raison de la flexibilité que ce dernier permet d'appliquer à la régulation de la consommation en termes de volume de trafic de chaque entité informatique $E_j$

vis-à-vis des ressources partagées $R_i$ connectées en réseau.

Le caractère de flexibilité de la mise en oeuvre du procédé objet de la présente invention sera maintenant illustré à partir de deux exemples, lesquels seront décrits en liaison avec les figures 4A et 4B.

Le caractère de flexibilité du procédé objet de l'invention permet, en particulier, la définition d'intervalles d'évaluation dédiés en fonction du contexte d'utilisation, c'est-à-dire l'utilisation qui est faite par le ou les utilisateurs de chaque entité informatique $E_j$.

En référence à la figure 4A, on indique que les intervalles d'évaluation peuvent être ajustés en durée compte tenu, par exemple, d'une évolution prévisible ou programmée du volume de trafic de l'entité informatique considérée, afin de s'assurer que l'estimation du volume de trafic est stable.

Sur la figure 4A, pour cette raison, on a représenté un intervalle d'évaluation antérieur, noté $I_{c-1}$ entre les instants $t_{n-1}$ et $t_n$, l'intervalle d'évaluation $I_{c-1}$ antérieur correspondant à quatre unités temporelles, par exemple, et l'intervalle d'évaluation courant $I_c$ suivant l'intervalle d'évaluation $I_{c-1}$ étant ramené, par exemple, à deux unités de temps. On conçoit, en particulier, qu'une telle opération peut être réalisée lors d'une évolution calendaire de l'utilisation de l'entité informatique $E_j$. Une telle situation se produit lorsque l'utilisation du système d'information constitutif de l'entité informatique $E_j$ considérée subit une évolution par diminution importante du nombre de transactions vers une même ressource partagée $R_i$, par exemple.

En outre, sur la figure 4A, on a représenté un intervalle d'évaluation ultérieure $I_{c+p, p}$ ayant une valeur arbitraire, lequel a été ramené à quatre unités de temps, par exemple, lors du retour à un nombre correspondant de transactions.

Un deuxième exemple du caractère de flexibilité du procédé objet de l'invention sera maintenant donné en liaison avec la figure 4B.

Dans cet exemple, on considère, de manière non limitative, que chaque intervalle temporel d'évaluation $I_{c-1}$, $I_c$ et $I_{c+1}$ et suivants ont une durée sensiblement fixe de manière non limitative. Toutefois, il est possible d'appliquer le mode de mise en oeuvre selon la figure 4B également lorsque chaque intervalle de temps d'évaluation est ajusté, ainsi que décrit en liaison avec la figure 4A.

Ainsi qu'on l'a représenté en figure 4B, les intervalles de temps de la base temporelle précitée sont chacun subdivisés en zones temporelles distinctes, notées $Z_1$, $Z_2$, $Z_3$ par exemple, à chaque zone temporelle distincte étant alloué un comptage-décomptage spécifique.

A titre d'exemple non limitatif, on indique que les zones temporelles $Z_1$ et $Z_2$ peuvent correspondre respectivement à quatre unités de temps disjointes et à deux unités de temps et la zone $Z_3$ à une unité de temps, par exemple. Dans l'exemple de la figure 4B, on considère à titre d'exemple non limitatif, que chaque intervalle temporel d'évaluation $I_c$ peut correspondre à une période d'une semaine, chaque unité de temps correspondant à un jour.

Ainsi, en référence à la figure 4B, on indique que, à la fin de chaque intervalle de temps $I_{c-1}$, $I_c$, $I_{c+1}$ et suivants, le procédé objet de l'invention peut avantageusement consister à comparer le volume de trafic obtenu par comptage-décomptage à une suite de valeurs de seuil.

Ainsi, le procédé objet de l'invention consiste avantageusement à allouer à chaque entité une classe de service pour chaque zone temporelle $Z_1$, $Z_2$, $Z_3$.

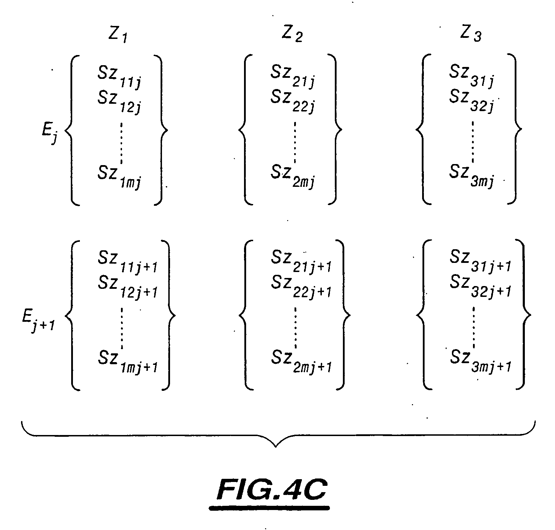

En référence à la figure 4C, on a représenté une définition des seuils attribués respectivement aux entités $E_j$ et $E_{j+i}$ pour les classes de service associées à chaque zone temporelle $Z_1$ à $Z_3$, chaque classe de service comportant une pluralité de valeurs de seuil, notées, pour la zone $Z_1$ et l'entité $E_j$, $Sz_{11j}$ à $Sz_{1mj}$, chaque valeur de seuil étant affectée à la zone temporelle correspondante. On indique, à titre d'exemple, que <u>m</u> définit le nombre de valeurs de seuil de chaque suite de valeurs de seuil.

On comprend, ainsi, qu'il est possible, à partir des zones temporelles d'évaluation précitées, $Z_1$ à $Z_3$, d'affecter des conditions d'accès spécifiques à chaque zone temporelle pour l'entité informatique considérée vis-à-vis de la ressource informatique $R_i$ pour laquelle l'accès est demandé.

En référence à l'exemple donné précédemment relativement à la figure 4B, on indique que les classes de service de l'entité informatique $E_j$ vis-à-vis de la ressource partagée $R_i$, peuvent alors être choisies conformément à une adaptation temporelle, compte tenu des habitudes d'utilisation de l'utilisateur ou des utilisateurs de l'entité informatique considérée en termes de volume de trafic moyen. Dans le cadre de l'exemple donné en figure 4B, la zone temporelle $Z_1$ peut consister en des conditions d'accès et de débit importants en début de semaine, des conditions d'accès $Z_2$ pour les deux jours suivants, le retour à des conditions d'accès à débit élevé pour la zone temporelle $Z_1$ suivant la zone temporelle $Z_2$ et enfin les conditions d'accès correspondant à un débit sensiblement réduit pour le dernier jour de la semaine correspondant à la zone temporelle $Z_3$, par exemple.

Le procédé objet de la présente invention permet ainsi de moduler le contrôle et la régulation de la consommation en termes de volume de trafic de toute entité informatique $E_j$ considérée en fonction des habitudes d'utilisation du ou des utilisateurs de l'entité informatique considérée.

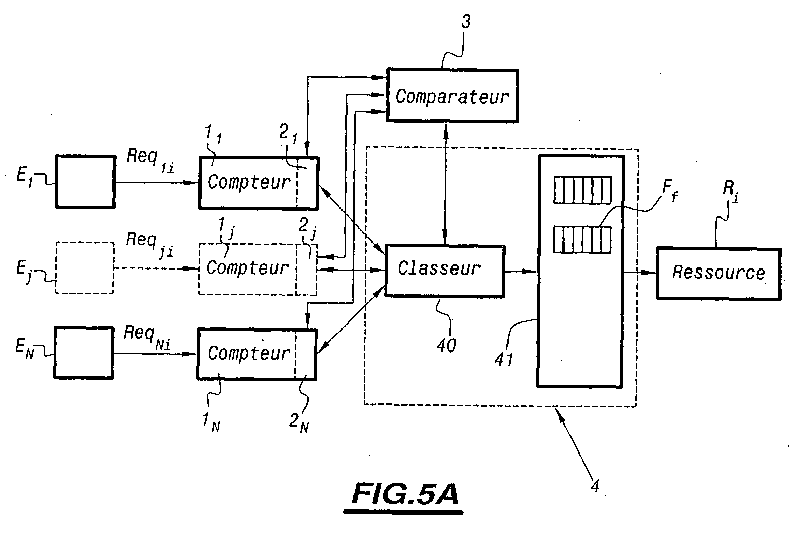

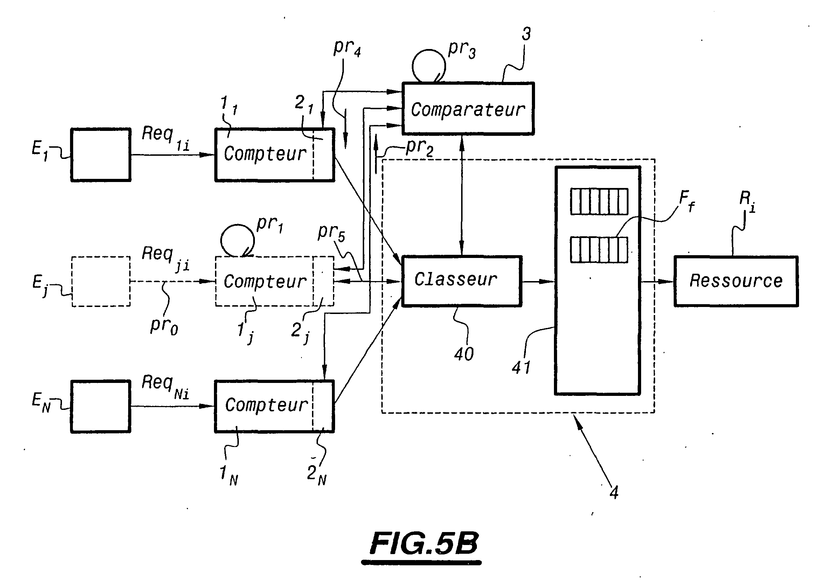

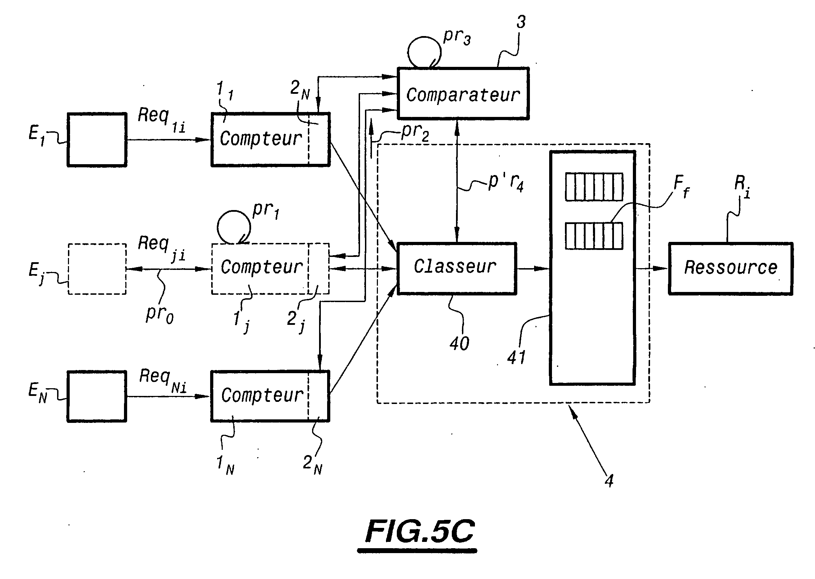

Un système de régulation de la consommation en termes de volume de trafic d'une pluralité d'entités informatiques et d'une pluralité de ressources partagées, conforme à l'objet de la présente invention, sera maintenant donné en liaison avec les figures 5A, 5B et 5C.

La figure 5A représente, de manière plus particulière, l'architecture d'un système conforme à l'objet de la présente invention, l'ensemble des éléments constitutifs de ce système étant interconnectés pour constituer ce dernier.

Sur la figure 5A, on a représenté la liaison entre les modules constitutifs de ce système par des doubles flèches, ces liaisons correspondant, par exemple, à des liaisons réseau soit de type réseau local, soit de type réseau étendu en fonction du mode de mise en oeuvre et de l'implantation des modules précités.

En tout état de cause, quelle que soit l'implantation susceptible d'être retenue, la régulation mise en oeuvre par le système objet de la présente invention, conformément au procédé décrit précédemment dans la description, est effectuée par ressource partagée $R_i$, l'accès à une telle ressource partagée étant effectué à partir d'une entité informatique $E_j$ sur requête d'accès adressée à la ressource partagée par l'entité informatique précitée.

Ainsi que représenté sur la figure 5A, le système objet de l'invention comprend, avantageusement, associé à l'entité informatique et à la ressource correspondante, un module de comptage-décomptage $1_j$ du volume de ressources consommé par les requêtes d'accès $Req_{ji}$ entre l'entité informatique et la ressource $R_i$.

Sur la figure 5A, on a représenté N entités informatiques $E_1$ à $E_N$, le module de comptage-décomptage ou compteur $1_j$ étant associé à l'entité informatique $E_j$. Ce module de comptage-décomptage délivre la valeur de volume de trafic décomptée.

En outre, au module de comptage-décomptage est associé un module $2_j$ d'échantillonnage à une suite de dates d'évaluation $t_n$ de la valeur de volume de trafic décomptée. Le module d'échantillonnage $2_j$ délivre la valeur décomptée du volume de trafic à la date d'évaluation courante $t_n$, désignée $D_c$, entre la ressource $R_i$ et l'entité informatique $E_j$.

Ainsi que représenté sur la figure 5A, à chaque entité informatique $E_j$ est, en fait, associé un module de comptage-décomptage $1_j$ et un module d'échantillonnage $2_j$.

En outre, le système objet de l'invention comprend un module comparateur 3 de la valeur fonction de la valeur décomptée de volume de trafic à la date d'évaluation courante entre la ressource $R_i$ et l'entité informatique $E_j$, le module comparateur 3 effectuant ainsi une comparaison de la valeur fonction de la valeur décomptée du volume de trafic à une pluralité de valeurs de seuil de volume de trafic, ainsi que décrit précédemment dans la description.

On rappelle que la distribution des valeurs de seuil précitées constitue une classification de l'entité informatique en termes de volume de trafic. Cette classification est établie pour l'intervalle de temps suivant l'intervalle de temps défini par la date d'évaluation suivant la date d'évaluation courante Dc et la date d'évaluation courante, en fonction de la valeur décomptée de volume de trafic à la date d'évaluation courante, ainsi que décrit précédemment en liaison avec la figure 4C.

Enfin, le système objet de la présente invention comprend un module 4 de contrôle de l'accès instantané à la ressource $R_i$ par l'entité informatique $E_j$ précitée. Les conditions d'accès à la ressource $R_i$, pour l'entité informatique, sont définies à partir de la classification de l'entité informatique en termes de volume de trafic, classification réalisé par l'intermédiaire du module comparateur 3.

En ce qui concerne l'implantation de l'ensemble des différents modules constitutifs du système objet de la présente invention, on indique que, de manière particulièrement avantageuse, chaque module de comptage-décomptage, encore désigné compteur $1_j$, peut, avantageusement, être interconnecté à chaque entité informatique $E_j$ par l'intermédiaire d'un réseau local ou, le cas échéant, directement implanté comme module logiciel dans le cas où l'entité informatique $E_j$ correspond à un nombre réduit de postes de travail constitutifs de cette entité informatique, le module de comptage-décomptage $1_j$ correspondant pouvant alors être implanté et commandé par les système gérant l'ensemble des postes de travail précités.

En ce qui concerne le module d'échantillonnage $2_j$, on indique que ce module d'échantillonnage est avantageusement constitué par un module logiciel directement associé au module de comptage. Les deux modules peuvent alors être fonctionnellement reliés pour assurer le calcul et la mémorisation de la valeur décomptée du volume de trafic à la date d'évaluation courante.

D'une manière générale, on indique que chaque module de comptage-décomptage comptabilise la consommation en termes de volume de trafic associée à l'entité $E_j$ jusqu'à la date $t_n$, date d'évaluation courante $D_c$. Ce module de comptage-décomptage peut être non linéaire.

En particulier, il peut correspondre au calcul du volume de trafic, ainsi que mentionné précédemment dans la description en liaison avec la figure 2 et , de préférence, en liaison avec les figures 4A et/ou 4B.

Dans ces conditions, le module de comptage permet de pondérer l'utilisation qui a été faite par l'entité informatique $E_j$ suivant différents critères, tels que l'heure et le jour de comptage, par l'intermédiaire des zones temporelles $Z_1$, $Z_2$ et $Z_3$.

Le comptage du volume de trafic peut aussi résulter d'un lissage exponentiel, par moyenne glissante sur intervalles d'évaluation successifs ou par moyenne simple.

Lorsque, en particulier, différentes zones temporelles sont utilisées sur chaque intervalle d'évaluation, le comptage peut consister à utiliser un module de comptage-décomptage par zone temporelle d'évaluation, ainsi que mentionné précédemment dans la description, le comptage étant alors effectué sous forme de vecteurs dont chaque coordonnée comptabilise l'utilisation suivant une classification d'heure ou de jour préalablement définie et permettant de couvrir les périodes d'utilisation possibles.

Pour un nombre P de zones temporelles $Z_p$ définies dans la classification, P = 3 dans le cas de la figure 4B, et pour une valeur de trafic $C_j(t_n,p)$, la valeur de comptage de volume de trafic correspondant à la zone temporelle $\underline{p}$, avec $1 \leq p \leq P$, est prélevée aux instants $t_n$ et les vecteurs de volume de trafic sont prélevés et mémorisés. De préférence, les k derniers prélèvements sont mémorisés, c'est-à-dire sur la durée de $\underline{k}$ intervalles d'évaluation couvrant une durée H, ainsi que décrit précédemment en liaison avec la figure 2. Ces valeurs sont alors transmises au module comparateur 3.

On définit alors une fonction d'évaluation à valeurs réelles F(p, l, $C_j(t_n)$, ..., $C_j(t_{n-k})$, $\underline{l}$ désignant la classe de service choisie pour l'entité $E_j$ vis-à-vis de la ressource $R_i$ pour la zone temporelle $Z_p$ et prenant en entrée l'historique du vecteur d'utilisation de l'entité informatique $E_j$ sur la durée d'évaluation H.

A titre d'exemple non limitatif, une réalisation possible de cette fonction d'évaluation peut correspondre à la relation :

$$F(p, l, t_n, \ldots, t_{n-k}, C_j(t_n), \ldots, C_j(t_{n-k})) = \left[ (((C_j(t_n,p) - Cj(t_{n-k}, p))/(t_n - t_{n-k}) - D_l(p))/D_l(p) \right]$$

relation dans laquelle $D_l(p)$ est un taux de consommation en termes de volume de trafic associé à la classe de service correspondant à la ressource $R_i$ pour une zone temporelle $Z_p$.

Ainsi, à chaque date d'évaluation $t_n$, la fonction d'évaluation est appliquée à chaque entité informatique $E_j$ pour chaque période d'utilisation ou zone temporelle $\underline{p}$. Ces valeurs sont comparées à M-1 seuils, $S_i(m)$ avec 0 < m < M relatifs à la classe de service $\underline{l}$ à laquelle adhère l'entité informatique $E_j$.

Les seuils précités définissent M intervalles de valeur déterminée.

Si l'évaluation donnée par l'application de la fonction d'évaluation spécifique à l'entité $E_j$ :

$$F_j(p, l, C_j(t_n), \ldots, C_j(t_{n-k}))$$

est discriminée comme appartenant au qième intervalle précédemment défini, alors sur la durée temporelle d'évaluation ] $t_n$, $t_{n+1}$] les demandes de consommation en termes de volume de trafic de la ressource $R_i$ arrivant pendant une zone temporelle $Z_p$ sont allouées à la file d'attente $F_f$ associée au qième intervalle, cette information étant matérialisée par le code de classification $A_{ji}(t_n)$.

En ce qui concerne le module comparateur 3, on indique que celui-ci peut être avantageusement relié à chaque module de comptage-décomptage $1_j$ et au module d'échantillonnage $2_j$ par l'intermédiaire d'un réseau étendu par exemple, le module comparateur 3 étant alors totalement délocalisé vis-à-vis de chaque entité $E_j$.

En ce qui concerne le module 4 de contrôle d'accès instantané, celui-ci peut, avantageusement, être directement associé à la ressource partagée Ri.

Ainsi que représenté sur la figure 5A, on indique que le module de contrôle d'accès instantané comprend, avantageusement, un module de classement 40, désigné classeur, lequel peut être connecté en réseau par l'intermédiaire du réseau étendu, d'une part, au module comparateur 3 et, d'autre part, à chaque entité. Le module de classement 40 est associé à un module de constitution de files d'attente 41 et le module de constitution de files d'attente 41 est lui-même connecté directement à la ressource partagée $R_i$.

Un premier et un deuxième modes de mise en oeuvre spécifique du système objet de la présente invention seront maintenant décrits en liaison avec la figure 5B, respectivement la figure 5C.

La figure 5B correspond à un système conforme à l'objet de la présente invention tel que représenté en figure 5A, dans lequel l'entité informatique $E_j$ transmet la requête d'accès $Req_{ji}$ par une transaction $pr_0$ au module de comptage $1_j$, lequel provoque l'opération de comptage-décomptage par l'opération $pr_1$, le module d'échantillonnage $2_j$ réalisant l'acquisition des valeurs de volume de trafic aux instants d'échantillonnage, c'est-à-dire aux dates d'évaluation précédemment citées dans la description. Ces valeurs sont transmises par la transaction $pr_2$ au module comparateur 3, lequel réalise l'opération de comparaison, c'est-à-dire d'application de la fonction d'évaluation $pr_3$ précédemment décrite dans la description.

Suite à l'établissement de cette classification par le module comparateur 3, le système exécute alors un protocole consistant à établir, au niveau du module comparateur, un code de classification alloué à l'entité, c'est-à-dire la valeur $A_{ji}(t_n)$ au cours de l'opération $pr_3$ précédemment mentionnée dans la description.

Le code de classification est alors transmis, dans une transaction $pr_4$, du module comparateur 3 vers l'entité $E_j$.

Dès lors, sur l'intervalle ]$t_n$, $t_{n+1}$], lorsque l'entité $E_j$ transmet, vers le module de contrôle d'accès 4, en particulier le classeur 40, une requête d'accès proprement dite, il y accole le code de classification précité par l'intermédiaire d'une

transaction notée $pr_5$ sur la figure 5B.

Il en va, bien entendu, de même pour toute entité de rang différent de j connectée au réseau et transmettant une requête d'accès à la ressource $R_i$.

Un autre mode de mise en oeuvre est représenté en figure 5C pour une architecture semblable à celle représentée en figure 5A du système objet de l'invention.

Dans cette situation, suite à la transmission de la requête d'accès au module comparateur 3 au cours de la transaction $pr_2$, la requête d'accès comportant au moins une référence de désignation de l'entité, c'est-à-dire de l'adresse j de cette dernière, le système conforme à l'objet de l'invention, tel que représenté en figure 5C, réalise ensuite la classification par l'intermédiaire du module comparateur 3 par l'opération $pr_3$ et exécute un protocole consistant à transmettre, du module comparateur 3 vers le module de contrôle d'accès 4 et, en particulier, vers le module classeur 40, par une transaction $p'r_4$ une liste de couples de variables référence de désignation d'entité, c'est-à-dire l'adresse j de cette dernière/code de classification attribué, c'est-à-dire la valeur $A_{ji}(t_n)$ obtenue grâce à la fonction d'évaluation précédemment décrite dans la description.

On a ainsi décrit un procédé et un système de régulation de la consommation de volume de trafic entre entités informatiques et ressources partagées connectées en réseau particulièrement remarquables dans la mesure où ces derniers permettent une très grande flexibilité d'utilisation en fonction du comportement de chacun des utilisateurs et, notamment, du volume de trafic engendré par chacun d'eux.

Le système et le procédé objets de l'invention permettent ainsi de personnaliser l'accès et les conditions d'accès au réseau, à partir des volumes de trafic engendrés par chaque utilisateur et par les entités informatiques utilisées par chacun d'eux, chacun se voyant ainsi offrir des conditions d'accès correspondant à son utilisation effective des services, chaque offre de forfait pouvant ainsi être personnalisée en fonction des conditions d'accès qui sont ainsi attribuées, notamment, en termes de volume de trafic et de débit.

## Revendications

1. Procédé de régulation de la consommation, en termes de volume de trafic, d'une pluralité d'entités informatiques ($E_1$... $E_n$) ayant accès à une ressource partagée ($R_i$) connectée en réseau à ces entités informatiques ($E_1$... $E_n$), l'accès à cette ressource partagée ($R_i$) étant effectué à partir d'une entité informatique sur requête d'accès adressée à ladite ressource par ladite entité informatique, le procédé comprenant les étapes consistant, pour chaque entité informatique :

   - à décompter (B) pour ladite entité informatique, au fil de l'émission des requêtes d'accès, le volume de trafic entre ladite entité informatique et ladite ressource ;
   - à déterminer (C), à une date d'évaluation courante, la valeur décomptée du volume de trafic entre ladite ressource et ladite entité informatique ;
   - à comparer (D) une valeur de classification fonction de la valeur décomptée du volume de trafic à la date d'évaluation courante à une pluralité de valeurs de seuil de volume de trafic, la distribution desdites valeurs de seuil constituant une classification de ladite entité informatique en termes de volume de trafic ; et
   - à contrôler (E) l'accès instantané à ladite ressource par ladite entité informatique pour l'intervalle de temps suivant la date d'évaluation courante, le procédé étant **caractérisé en ce qu'**il comprend les étapes consistant :

      - à établir (A) une base temporelle constituée par une suite d'intervalles de temps séparés par des instants, constitutifs de dates d'évaluation ; et
      - à établir ($E_0$) une pluralité de files d'attente d'accès à ladite ressource partagée, chaque file d'attente étant associée à un intervalle de valeurs de seuil ;

   et **en ce que** l'étape de contrôle d'accès instantané comporte l'allocation de chaque requête d'accès de ladite entité informatique à la file d'attente associée à l'intervalle de valeurs de seuil dans lequel se trouve ladite valeur de classification.

2. Procédé selon la revendication 1, **caractérisé en ce que** ledit volume de trafic est défini pour tout ou partie de l'ensemble du volume de trafic antérieur à la date d'évaluation courante.

3. Procédé selon la revendication 1 ou 2, **caractérisé en ce que** ladite pluralité de files d'attente est organisée selon un ordre de priorités, à chaque file d'attente étant attribué un ordre de priorité relatif vis-à-vis de l'ordre de priorité d'une autre file d'attente.

**4.** Procédé selon la revendication 1 ou 2, **caractérisé en ce que** ladite pluralité de files d'attente est gérée selon un protocole de séquencement périodique pondéré de l'accès à ladite ressource partagée, alloué à chaque file d'attente.

**5.** Procédé selon l'une des revendications précédentes, **caractérisé en ce qu'**il comprend une étape d'allocation d'une classe de service à chaque entité informatique, chaque classe de service étant définie à partir d'une fonction spécifique d'évaluation du volume de trafic et d'une correspondance avec une suite de valeurs de seuil successives permettant la classification de ladite entité sur l'intervalle d'évaluation.

**6.** Procédé selon la revendication 5, **caractérisé en ce que** les intervalles d'évaluation sont périodiques.

**7.** Procédé selon la revendication 5, **caractérisé en ce que** les intervalles d'évaluation sont dédiés en fonction du contexte d'utilisation.

**8.** Procédé selon l'une des revendications 1 à 6, **caractérisé en ce que** ladite base temporelle comprend une suite d'intervalles de temps, chaque intervalle de temps étant subdivisé en zones temporelles distinctes, à chaque zone temporelle distincte étant alloué un comptage-décomptage spécifique.

**9.** Procédé selon la revendication 8, **caractérisé en ce que**, à la fin de chaque intervalle de temps, il comprend une étape consistant à comparer, pour chaque zone temporelle, la valeur de classification à une suite de valeurs de seuil.

**10.** Procédé selon les revendications 8 et 9, **caractérisé en ce que** l'étape d'allocation d'une classe de service est effectuée pour chaque zone temporelle.

**11.** Procédé selon la revendication 10, **caractérisé en ce que** l'étape de contrôle d'accès instantané, pour la zone temporelle, sur l'intervalle de temps suivant, est effectuée à partir de la classification obtenue sur ladite zone temporelle.

**12.** Système de régulation de la consommation, en termes de volume de trafic, d'une pluralité d'entités informatiques ($E_1...E_n$) ayant accès à une ressource partagée ($R_i$) en réseau à ces entités informatiques ($E_1... E_n$), l'accès à cette ressource ($R_i$) partagée étant effectué à partir d'une entité informatique sur requête d'accès adressée à ladite ressource par ladite entité informatique, ledit système comprenant, pour chaque entité informatique ($E_j$) :

- des moyens de comptage-décomptage ($1_j$), au fil de l'émission des requêtes d'accès, du volume de trafic entre ladite entité informatique et ladite ressource, lesdits moyens de comptage-décomptage délivrant une valeur de volume de trafic décomptée ;
- des moyens d'échantillonnage ($2_j$), à une date d'évaluation courante, de ladite valeur de volume de trafic décomptée, lesdits moyens d'échantillonnage délivrant la valeur décomptée du volume de trafic à la date d'évaluation courante entre ladite ressource et ladite entité informatique ;
- des moyens comparateurs (3) d'une valeur de classification fonction de la valeur décomptée du volume de trafic à la date d'évaluation courante à une pluralité de valeurs de seuil de volume de trafic, la distribution desdites valeurs de seuil constituant une classification de ladite entité informatique en termes de volume de trafic ;
- des moyens de contrôle (4) de l'accès instantané à ladite ressource par ladite entité informatique, pour l'intervalle de temps suivant la date d'évaluation courante,

le système étant **caractérisé en ce qu'**il comprend une base temporelle constituée par une suite d'intervalles de temps séparés par des instants, constitutifs de dates d'évaluation, et une pluralité de files d'attente ($F_f$) d'accès à ladite ressource partagée, chaque file d'attente étant associée à un intervalle de valeurs de seuil, et **en ce que** les moyens de contrôle (4) sont adaptés pour allouer chaque requête d'accès de ladite entité informatique à la file d'attente associée à l'intervalle de valeurs de seuil dans lequel se trouve ladite valeur de classification.

**13.** Système selon la revendication 12, **caractérisé en ce que**, les intervalles de temps étant subdivisés en zones temporelles distinctes, lesdits moyens de comptage-décomptage comportent une pluralité de compteurs-décompteurs, chaque compteur-décompteur étant associé à une zone temporelle, ladite pluralité de compteurs-décompteurs étant associée à ladite entité informatique.

**14.** Système selon la revendication 12 ou 13, **caractérisé en ce que** en ce que lesdits moyens comparateurs sont constitués par un module logiciel implanté au niveau de ou délocalisé vis-à-vis de chaque entité informatique.

**15.** Système selon l'une des revendications 12 à 14, **caractérisé en ce que**, sur établissement de ladite classification par lesdits moyens comparateurs, ledit système exécute un protocole consistant à :

- établir au niveau desdits moyens comparateurs un code de classification alloué à ladite entité informatique ;
- transmettre desdits moyens comparateurs vers ladite entité informatique ledit code de classification ;
- transmettre de ladite entité informatique vers lesdits moyens de contrôle d'accès ladite requête d'accès à ladite ressource accompagnée dudit code de classification.

**16.** Système selon l'une des revendications 12 à 14, **caractérisé en ce que**, suite à la transmission de la requête d'accès auxdits moyens comparateurs, ladite requête d'accès comportant au moins une référence de désignation de ladite entité informatique, ledit système, sur établissement de ladite classification par lesdits moyens comparateurs, exécute un protocole consistant à transmettre desdits moyens comparateurs auxdits moyens de contrôle d'accès une liste de couples de variables référence de désignation d'entité/code de classification attribué.

**Claims**

**1.** Method of regulating the consumption, in terms of traffic volume, of a plurality of computer entities ($E_1$... $E_n$) having access to a shared resource ($R_i$) connected through a network to these computer entities ($E_1$...$E_n$), the access to this shared resource ($R_i$) being performed from a computer entity-upon an access request addressed to said resource by said computer entity, the method comprising the steps consisting, for each computer entity:

- in metering (B) for said computer-entity, as-the access requests are sent, the volume of traffic between said computer entity and said resource;
- in determining (C), at a current evaluation date, the metered value of the traffic volume between said resource and said computer entity;
- in comparing (D) a classification value dependent on the metered value of the traffic volume-at the current evaluation date with a plurality of traffic volume threshold values, the distribution of said threshold values constituting a classification of said computer entity in terms of traffic volume; and
- in supervising (E) the instantaneous access to said resource by said computer entity for the time interval following the current evaluation date, the method being **characterized in that** it comprises the steps consisting:

- in establishing (A) a time base consisting of a series of time intervals separated by instants, which make up evaluation dates;-and
- in establishing ($E_0$) a plurality of queues for access to said shared resource, each queue being associated with an interval of threshold values;

and **in that** the step of supervision of instantaneous access comprises the allocation of each access request of said computer entity to the queue associated to the interval of threshold values in which said classification value lies.

**2.** Method according to Claim 1, **characterized in that** said traffic volume is defined for all or part of the whole of the traffic volume prior to the current evaluation date.

**3.** Method according to Claim 1 or 2, **characterized in that** said plurality of queues is organized according to an order of priorities, a relative order of priority vis-à-vis the order of priority of another queue being allocated to each queue.

**4.** Method according to Claim 1 or 2, **characterized in that** said plurality of queues is managed according to a protocol of weighted periodic sequencing of access to said shared resource, allocated to each queue.

**5.** Method according to one of the preceding claims, **characterized in that** it comprises a step of allocating a class of service to each computer entity, each class of service-being defined on the basis of a specific function for evaluating the traffic volume and a correspondence with a series of successive threshold values allowing the classification of said entity over the evaluation interval.

**6.** Method according to Claim 5, **characterized in that** the evaluation intervals are periodic.

**7.** Method according to Claim 5, **characterized in that** the evaluation intervals are dedicated as a function of the context of use.

8. Method according to one of Claims 1 to 6, **characterized in that** said time base comprises a series of time intervals, each time interval being subdivided into distinct time zones, a specific up/down metering being allocated to each distinct time zone.

9. Method according to Claim 8, **characterized in that**, at the end of each time interval, it comprises a step consisting in comparing, for each time zone, the classification value with a series of threshold values.

10. Method according to Claims 8 and 9, **characterized in that** the step of allocating a service class is performed for each time zone.

11. Method according to Claim 10, **characterized in that** the step of supervising instantaneous access, for the time zone, over the following time interval, is performed on the basis of the classification obtained over said time zone.

12. System of regulating the consumption, in terms of traffic volume, of a plurality of computer entities ($E_i...E_n$) having access to a shared resource ($R_i$) connected through a network to these computer entities ($E_1...E_n$), the access to this shared resource ($R_i$) being performed from a computer entity upon an access request addressed to said resource by said computer entity, said system comprising, for each computer entity ($E_j$):

   - means of up/down metering ($1_j$), as the access requests are sent, of the volume of traffic between said computer entity and said resource, said means of up/down metering delivering a metered value of traffic volume;
   - means of sampling ($2_j$), at a current evaluation date, of said metered value of the traffic volume, said sampling means delivering the metered value of the traffic volume at the current evaluation date between said resource and said computer entity;
   - comparator means (3) comparing a classification value dependent on the metered value of the traffic volume at the current evaluation date with a plurality of traffic volume threshold values, the distribution of said threshold values constituting a classification of said computer entity in terms of traffic volume;
   - means of supervision (4) of the instantaneous access to said resource by said computer entity for the time interval following the current evaluation date,

   the system being **characterized in that** it comprises a time base consisting of a series of time intervals separated by instants, which make up evaluation dates, and a plurality of queues ($F_f$) for access to said shared resource, each queue being associated with an interval of threshold values, and-in that the means of supervision (4) are adapted so as to allocate each access request of said computer entity to the queue associated to the -interval of threshold values in which said classification value lies.

13. System according to Claim 12, **characterized in that**, the time intervals being subdivided into distinct time zones, said means of up/down metering comprise a plurality of up/down meters, each up/down meter being associated with a time zone, said-plurality of up/down meters being associated with said computer entity.

14. System according to Claim 12 or 13, **characterized in that** said comparator means consist of a software module implanted in or off-site vis-à-vis, each computer entity.

15. System according to one of Claims 12 to 14, **characterized in that**, upon establishment of said classification by said comparator means, said system executes a protocol consisting in:

   - establishing by said comparator means a classification code allocated to said computer entity;
   - transmitting from said comparator means to said computer entity said classification code;
   - transmitting from said computer entity to said access supervision means said access-request to said resource accompanied by said classification code.

16. System according to one of Claims 12 to 14, **characterized in that**, following the transmission of the access request to said comparator means, said access request comprising at least one designation reference of said computer entity, said system, upon establishment of said classification by said comparator means, executes a process consisting in transmitting from said comparator means to said access supervision means a list of pairs of variables, entity designation reference/allocated classification code.

**Patentansprüche**

1.  Verfahren zur Regelung des Verbrauchs an Verkehrsvolumen durch mehrere Informatikeinheiten ($E_1$, ..., $E_n$), die auf eine mit diesen tnformatikeinheiten ($E_1$, ..., $E_n$) vernetzte, gemeinsam genutzte Ressource ($R_i$) Zugriff haben, wobei der Zugriff auf diese gemeinsam genutzte Ressource ($R_i$) ausgehend von einer Informatikeinheit auf eine Zugriffsanforderung hin erfolgt, die von der Informatikeinheit an die Ressource adressiert wird, wobei das Verfahren die Schritte aufweist, die für jede Informatikeinheit darin bestehen:

    - für die Informatikeinheit im Laufe der Aussendung der Zugriffsanforderungen das Verkehrsvolumen zwischen der Informatikeinheit und der Ressource zu zählen (B);
    - an einem laufenden Bewertungsdatum den gezählten Wert des Verkehrsvolumens zwischen der Ressource und der Informatikeinheit zu bestimmen (C);
    - einen vom gezählten Wert des Verkehrsvolumens am laufenden Bewertungsdatum abhängenden Klassifizierungswert mit mehreren Verkehrsvolumen-Schwellwerten zu vergleichen (D), wobei die Verteilung der Schwellwerte eine verkehrsvolumenmäßige Klassifizierung der Informatikeinheit darstellt; und
    - den augenblicklichen Zugriff auf die Ressource durch die Informatikeinheit für den Zeitintervall nach dem laufenden Bewertungsdatum zu überwachen (E),
    wobei das Verfahren **dadurch gekennzeichnet ist, dass** es die Schritte aufweist, die darin bestehen:

    - eine Zeitbasis zu erstellen (A), die aus einer Folge von Zeitintervallen - besteht, die durch Augenblicke getrennt sind, die Bewertungsdaten bilden; und
    - mehrere Warteschlangen für Zugriff auf die gemeinsam genutzte Ressource zu erstellen ($E_0$), wobei jede Warteschlange einem Intervall von Schwellwerten zugeordnet ist;

    und dass der Schritt der Überwachung des augenblicklichen Zugriffs die Zuteilung jeder Zugriffsanforderung der Informatikeinheit zu der Warteschlange aufweist, die dem Intervall von Schwellwerten zugeordnet ist, in dem sich der Klassifizierungswert befindet.

2.  Verfahren nach Anspruch 1, **dadurch gekennzeichnet, dass** das Verkehrsvolumen für die ganze oder einen Teil der Gesamtheit des Verkehrsvolumens vor dem laufenden Bewertungsdatum definiert wird.

3.  Verfahren nach Anspruch 1 oder 2, **dadurch gekennzeichnet, dass** die mehreren Warteschlangen gemäß einer Prioritätsordnung organisiert sind,
    wobei jeder Warteschlange eine relative Prioritätsordnung -bezüglich der Prioritätsordnung einer anderen Warteschlange zugeteilt wird.

4.  Verfahren nach Anspruch 1 oder 2, **dadurch gekennzeichnet, dass** die mehreren Warteschlangen gemäß einem Protokoll für gewichtetes periodisches Sequenzieren des Zugriffs auf die gemeinsam genutzte Ressource verwaltet werden, das jeder Warteschlange zugewiesen wird.

5.  Verfahren nach einem der vorhergehenden Ansprüche, **dadurch gekennzeichnet, dass** es einen Schritt der Zuweisung einer Dienstklasse zu jeder Informatikeinheit aufweist, wobei jede Dienstklasse ausgehend von einer spezifischen Bewertungsfunktion des Verkehrsvolumens und einer Entsprechung mit einer Folge von aufeinander folgenden Schwellwerten definiert wird, die die Klassifizierung der Einheit im Bewertungsintervall ermöglichen.

6.  Verfahren nach Anspruch 5, **dadurch gekennzeichnet, dass** die Bewertungsintervalle periodisch sind.

7.  Verfahren nach Anspruch 5, **dadurch gekennzeichnet, dass** die Bewertungsintervalle in Abhängigkeit vom Benutzungskontext dediziert werden.

8.  Verfahren nach einem der Ansprüche 1 bis 6, **dadurch gekennzeichnet, dass** die Zeitbasis eine Folge von Zeitintervallen enthält, wobei jeder Zeitintervall in unterschiedliche Zeitzonen unterteilt ist, wobei jeder unterschiedlichen Zeitzone ein spezifisches Vorwärts-Rückwärts-Zählen zugewiesen wird.

9.  Verfahren nach Anspruch 8, **dadurch gekennzeichnet, dass** es am Ende jedes Zeitintervalls einen Schritt aufweist, der darin besteht, für jede Zeitzone den Klassifizierungswert mit einer Folge von Schwellwerten zu vergleichen.

10. Verfahren nach den Ansprüchen 8 und 9, **dadurch gekennzeichnet, dass** der Schritt der Zuweisung einer Dienstklasse für jede Zeitzone durchgeführt wird.

11. Verfahren nach Anspruch 10, **dadurch gekennzeichnet, dass** der Schritt der Überwachung- des augenblicklichen Zugriffs für die Zeitzone im folgenden Zeitintervall ausgehend von der Klassifizierung durchgeführt wird, die in der Zeitzone erhalten wird.

12. System zur Regelung des Verbrauchs an Verkehrsvolumen durch mehrere Informatikeinheiten ($E_1$, ..., $E_n$), die auf eine mit diesen Informatikeinheiten ($E_1$, ..., $E_n$) vernetzte, gemeinsam genutzte Ressource ($R_i$) Zugriff haben, wobei der Zugriff auf diese gemeinsam genutzte Ressource ($R_i$) ausgehend von einer Informatikeinheit auf eine Zugriffsanforderung hin erfolgt, die von der Informatikeinheit an die Ressource adressiert wird, wobei das System für jede Informatikeinheit ($E_j$) aufweist:

   - Mittel zum Vorwärts-Rückwärts-Zählen ($1_j$) des Verkehrsvolumens zwischen der Informatikeinheit und der Ressource im Lauf der Aussendung der Zugriffsanforderungen, wobei die Vorwärts-Rückwärts-Zählmittel einen gezählten Verkehrsvolumenwert liefern;
   - Mittel zum Tasten ($2_j$) des gezählten Verkehrsvolumenwerts an einem laufenden Bewertungsdatum, wobei die Tastmittel den gezählten Wert des Verkehrsvolumens am laufenden Bewertungsdatum zwischen der Ressource und der Informatikeinheit liefern;
   - Mittel zum Vergleich (3) eines Klassifizierungswerts, der vom gezählten Wert des Verkehrsvolumens am laufenden Bewertungsdatum abhängt, mit mehreren Verkehrsvolumen-Schwellwerten, wobei die Verteilung der Schwellwerte eine Klassifizierung der Informatikeinheit bezüglich des Verkehrsvolumens darstellt;
   - Mittel (4) zur Überwachung des augenblicklichen Zugriffs auf die Ressource durch die Informatikeinheit, für den Zeitintervall nach dem laufenden Bewertungsdatum,

   wobei das System **dadurch gekennzeichnet ist, dass** es eine Zeitbasis, die aus einer Folge von Zeitintervallen besteht, die durch Augenblicke getrennt sind, die Bewertungsdaten bilden, und mehrere Zugriffswarteschlangen ($F_f$) auf die gemeinsam genutzte Ressource aufweist, wobei jede Warteschlange einem Schwellwertintervall zugeordnet ist, und dass die Überwachungsmittel (4) ausgelegt sind, um jede Zugriffsanforderung der Informatikeinheit der Warteschlange zuzuweisen, die dem Schwellwertintervall zugeordnet ist, in dem sich der Klassifizierungswert befindet.

13. System nach Anspruch 12, **dadurch gekennzeichnet, dass**, da die Zeitintervalle in unterschiedliche Zeitzonen unterteilt sind, die Vorwärts-Rückwärts-Zählmittel mehrere Vorwärts-Rückwärts-Zähler aufweisen, wobei jeder Vorwärts-Rückwärts-Zähler einer Zeitzone zugeteilt ist, wobei die mehreren Vorwärts-Rückwärts-Zähler der Informatikeinheit zugeordnet sind.

14. System nach Anspruch 12 oder 13, **dadurch gekennzeichnet, dass** die Vergleichsmittel aus einem Softwaremodul bestehen, der in Höhe jeder Informatikeinheit oder zu ihr verlagert angeordnet ist.

15. System nach einem der Ansprüche 12 bis 14, **dadurch gekennzeichnet, dass** beim Erstellen der Klassifizierung durch die Vergleichsmittel das System ein Protokoll ausführt, das darin besteht:

   - in Höhe der Vergleichsmittel einen Klassifizierungscode zu erstellen, der der Informatikeinheit zugewiesen wird;
   - den Klassifizierungscode von den Vergleichsmitteln zur Informatikeinheit zu übertragen;
   - die Zugriffsanforderung auf die Ressource zusammen mit dem Klassifizierungscode von der Informatikeinheit zu den Zugriffsüberwachungsmitteln zu übertragen.

16. System nach einem der Ansprüche 12 bis 14, **dadurch gekennzeichnet, dass** es nach der Übertragung der Zugriffsanforderung an die Vergleichsmittel, wobei die Zugriffsanforderung mindestens eine Bezeichnungsreferenz der Informatikeinheit enthält, beim Erstellen der Klassifizierung durch die Vergleichsmittel ein Protokoll ausführt, das darin besteht, von den Vergleichsmitteln zu den Zugriffsüberwachungsmitteln eine Liste von Paaren von Variablen bestehend aus Einheitsbezeichnungsreferenz und zugeteiltem Klassifizierungscode zu übertragen.

$$E_j, R_i$$
$$\{t_n\}\{t_n\}_j \quad \sim A$$

$Req_{j,i}$

$$\boxed{\textit{Décomptage } C_j} \quad \sim B$$

$$\boxed{C_{j(tn)}} \quad \sim C$$

$$\diamond \; S_x < F[C_{j(tn)}] < S_{x+1} \quad D$$

$$A_{ji(tn)}$$

$$\boxed{\begin{array}{c}\textit{Contrôle d'accès} \\ \textit{instantané } A_{ji(tn)}\end{array}} \quad \sim E$$

**_FIG.1_**

## FIG.2

File d'attente $\{F_f\}$ — $E_0$

$F_f \Longleftrightarrow CA_f$ — $E_1$

$A_{ji(tn)} \Longleftrightarrow F_f$ — $E_2$

## FIG.3A

$F_1 = 1$      $F_2 = 2$      $F_3 = 3$    $1 < 2 < 3$

| $Req_{j,i}$ | | $Req_{j-2,i}$ | | $Req_{j-1,i}$ |
|---|---|---|---|---|
| $Req_{j+1,i}$ | | | | |
| $Req_{j,i}$ | | | | |
| | | | | |

## FIG.3B

F1

*FIG.3C*

F2 — 5

3 — F3

$I_{c-1}$ | $I_c$ | $I_{c+p}$

0 | $t_{n-1}$ | $t_n$ | $t_{n+1}$ $t_{n+2}$ | $t_{n+p}$ | $t_{n+p+1}$ | $t$

$D_c$ $D_{sc}$

*FIG.4A*

$I_{c-1}$ | $I_c$ | $I_{c+1}$

$Z_1$ $Z_2$ $Z_1$ $Z_3$ $Z_1$ $Z_2$ $Z_1$ $Z_3$ $Z_1$ $Z_2$ $Z_1$ $Z_3$ $Z_1$ $Z_2$ $Z_1$ $Z_3$

0 | $t_{n-2}$ | $t_{n-1}$ | $t_n$ | $t_{n+1}$ | $t_{n+2}$ | $t$

$D_c$ $D_{sc}$

*FIG.4B*

$$
E_j
\begin{cases}
Sz_{11j} \\
Sz_{12j} \\
\vdots \\
Sz_{1mj}
\end{cases}
\quad Z_1
\qquad
\begin{cases}
Sz_{21j} \\
Sz_{22j} \\
\vdots \\
Sz_{2mj}
\end{cases}
\quad Z_2
\qquad
\begin{cases}
Sz_{31j} \\
Sz_{32j} \\
\vdots \\
Sz_{3mj}
\end{cases}
\quad Z_3
$$

$$
E_{j+1}
\begin{cases}
Sz_{11j+1} \\
Sz_{12j+1} \\
\vdots \\
Sz_{1mj+1}
\end{cases}
\qquad
\begin{cases}
Sz_{21j+1} \\
Sz_{22j+1} \\
\vdots \\
Sz_{2mj+1}
\end{cases}
\qquad
\begin{cases}
Sz_{31j+1} \\
Sz_{32j+1} \\
\vdots \\
Sz_{3mj+1}
\end{cases}
$$

## FIG.4C

**FIG.5A**

*FIG.5B*

**FIG.5C**

EP 1 559 249 B1